# EUROPÄISCHE PATENTSCHRIFT

(11) **EP 1 720 176 B1**
(45) Veröffentlichungstag und Bekanntmachung des Hinweises auf die Patenterteilung: **03.01.2007**
(21) Anmeldenummer: 05290926.4
(22) Anmeldetag: 06.05.2005
(51) Int. Cl.: H01B 12/06, H02G 15/34, F16L 59/14

(54) **Supraleiterkabel**
Superconducting cable
Câble supraconducteur

(43) Veröffentlichungstag der Anmeldung: 08.11.2006
(73) Patentinhaber: Nexans, 75008 Paris (FR)
(72) Erfinder: Allais, Arnaud, Dr. Ing., 30625 Hannover (DE); Schmidt, Frank, 30855 Langenhagen (DE); Marzahn, Erik, Ing., 38100 Braunschweig (DE)
(74) Vertreter: Döring, Roger

(56) Entgegenhaltungen:
- DE-A1- 10 221 534
- DE-U1- 9 005 743
- US-A- 3 603 715
- US-A- 3 800 414

## Beschreibung

Die Erfindung betrifft ein Supraleiterkabel mit einer supraleitenden flexiblen Kabelseele, welche in einem Kryostaten verlegt ist. Ein derartiges Supraleiterkabel ist z.B. aus US 3,603,715 bekannt.

Zur Herstellung eines Supraleiterkabels wird eine supraleitende Kabelseele hergestellt, die anschließend in einen Kryostaten eingezogen wird, oder die supraleitende Kabelseele wird in kontinuierlicher Arbeitsweise von den einzelnen Komponenten des Kryostaten umhüllt.

Bei der Herstellung der supraleitfähigen flexiblen Kabelseele wird zunächst um ein Seil aus Kupferdrähten eine Vielzahl von supraleitfähigen Bändern mit einer relativ großen Schlaglänge aufgelegt. Anschließend werden mehrere Lagen eines bandförmigen Isolierwerkstoffs auf die Lage supraleitfähiger Bänder aufgelegt. In der Regel werden Bänder aus Papier oder mit Kunststoff laminierte Bänder auf die Lage aus supraleitfähigen Bändern aufgewickelt. Über diese Lage aus Isolierwerkstoff wird die Abschirmung aufgebracht, welche aus zumindest einer Lage aus supraleitfähigen Bändern besteht, die mit großer Schlaglänge auf die Isolierschicht aufgewickelt werden. Über der äußeren supraleitfähigen Lage befindet sich noch eine Lage aus Kupferbändern.

Ein in einem Kryostaten angeordnetes Supraleiterkabel ist beispielsweise aus der DE 102 21 534 A1 bekannt. Da die Fertigung des Supraleiterkabels und dessen Unterbringung in dem Kryostaten bei Raumtemperatur erfolgt, der Betrieb des Supraleiterkabels jedoch unterhalb der Sprungtemperatur des supraleitfähigen Materials stattfindet, findet während der Abkühlung eine Kontraktion des Supraleiterkabels statt, die beispielsweise bei einer Abkühlung von 300 K auf 77 K ca. 0,3 % beträgt. Bei einer Kabellänge von z. B. 600 m beträgt die Kontraktion der Kabelseele somit beispielsweise 1,8 m

Es entsteht also ein Problem, das darin besteht, daß die bei der Abkühlung entstehende Kontraktion durch eine Überlänge der Kabelseele ausgeglichen werden muß, da ansonsten starke Zugkräfte durch die Kabelseele ausgeübt würden, die zu deren Beschädigung führen könnten.

Zur Lösung dieses Problems ist es aus der DE 10 2004 019 141 bekannt, eine supraleitfähige Kabelseele von einem Vorrat abzuziehen, die Kabelseele mit einem längseinlaufenden Metallband zu umhüllen, das Metallband zu einem Rohr zu formen, die Längskanten zu verschweißen und das geschweißte Rohr zu wellen, wobei der Innendurchmesser des gewellten Rohres größer ist als der Durchmesser der Kabelseele. Die Kabelseele und das gewellte Metallrohr werden dann auf eine Kabeltrommel aufgewickelt. Die Enden der Kabelseele werden mit den Enden des gewellten Rohres mechanisch miteinander verbunden, während die Kabelseele und das gewellte Rohr auf der Kabeltrommel befindlich sind. Aufgrund der Steifigkeit der Kabelseele legt sich diese beim Aufwickeln an die außen gelegene Innenwandung des Metallrohres an, d. h. die Kabelseele ist bestrebt, den größtmöglichen Windungsdurchmesser anzunehmen, wodurch die Überlänge der Kabelseele gegenüber dem Metallrohr hergestellt wird.

Der vorliegenden Erfindung liegt die Aufgabe zugrunde, eine Möglichkeit anzugeben, die beim Abkühlen entstehende Kontraktion für das Supraleiterkabel unschädlich zu machen.

Diese Aufgabe wird durch die im Kennzeichen des Patentanspruchs 1 erfaßten Merkmale gelöst.

Weitere vorteilhafte Ausgestaltungen der Erfindung sind in den Unteransprüchen erfaßt.

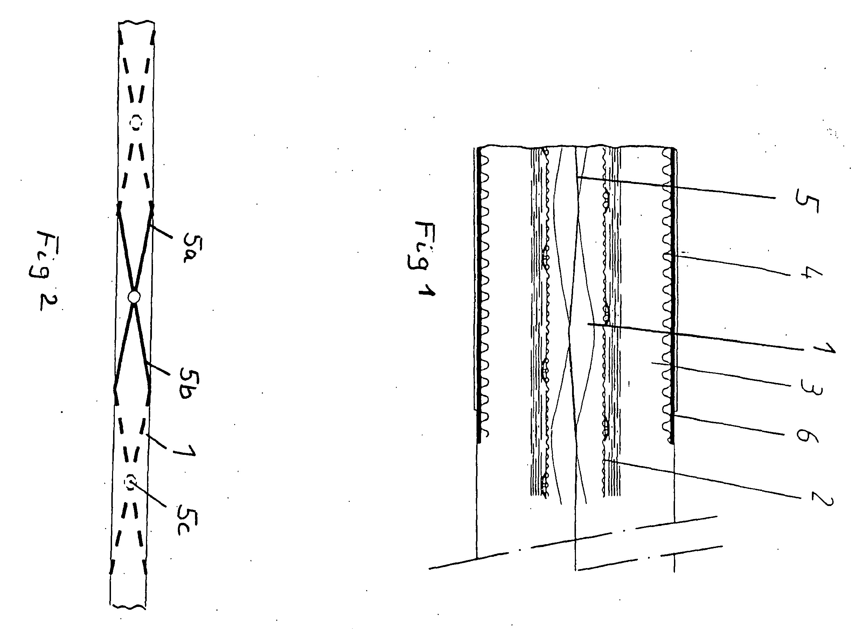

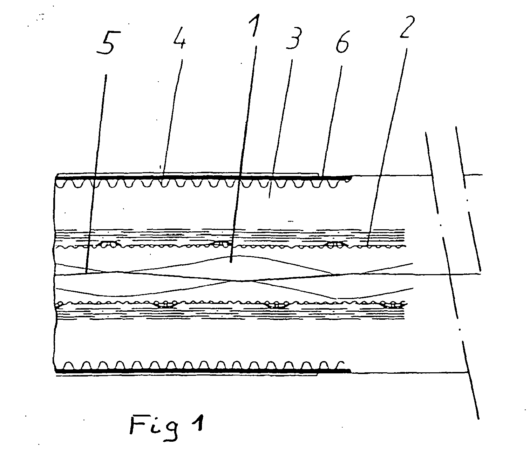

Die Erfindung ist anhand der in den Figuren 1 und 2 schematisch dargestellten Ausführungsbeispiele näher erläutert.

Figur 1 zeigt einen seitlichen Schnitt durch einen Kryostaten, welcher eine supraleitfähige Kabelseele 1 umgibt. Der Kryostat besteht aus einem gewellten Metallrohr 2, einer Superisolierung 3 sowie einem gewellten Metallrohr 4. Die gewellten Metallrohre 2 und 4 sind in kontinuierlicher Arbeitsweise durch Formen eines Metallbandes zu einem Schlitzrohr, Verschweißen des Schlitzes und anschließendes Wellen hergestellt. Die Superisolierung 3 besteht aus wechselweise aufgebrachten Lagen aus reflektierenden Metallfolien und nicht wärmeleitendem Material wie z. B. Glasfaservlies. Zusätzlich ist der Raum zwischen den Metallrohren 2 und 4 evakuiert.

Das Supraleiterkabel kann durch Einschieben des mit der Superisolierung 3 versehenen Metallrohres 2 in das Metallrohr 4 hergestellt werden. Die Kabelseele 1 kann vorher oder nachher in das Metallrohr 2 eingezogen werden.

Für die Herstellung großer Längen bietet sich ein Verfahren an, bei dem zunächst ein Metallband um die kontinuierlich von einer Vorratsspule abgezogene Kabelseele zu einem Rohr geformt, das Rohr längsnahtverschweißt und abschließend gewellt wird. Auf dieses Metallrohr 2 wird die Superisolierung 3 aufgebracht und über diese das Metallrohr 4 - wie für das Metallrohr 2 beschrieben - aufgebracht. Mit 6 ist ein Kunststoffmantel bezeichnet.

Gemäß der Lehre der Erfindung verläuft die Kabelseele 1 in Form einer Wellenlinie oder Wendel, wenn sich das Supraleiterkabel bei Raumtemperatur befindet, was bei der Herstellung der Normalfall ist. Dadurch wird eine "Überlänge" der Kabelseele in dem Kryostaten erzeugt. Die Wellenform bzw. Wendel wird durch ein oder mehrere Elemente 5 z. B. Drähte oder Bänder aus einem Metall mit einem extrem niedrigen Wärmeausdehnungskoeffizienten fixiert, die in vorbestimmten Abständen mit der äußeren Oberfläche der Kabelseele 1, die aus einer Bebänderung aus Kupfer besteht, z. B. durch Löten oder Schweißen verbunden sind.

Als Material für die Drähte oder Bänder wird Invarstahl bevorzugt.

In der Figur 2 ist ein bevorzugtes Ausführungsbeispiel der Kabelseele 1 gezeigt. Es sind zwei Drähte 5a und 5b mit großer Schlaglänge auf die Kabelseele aufgelegt. Die Schlagrichtung des Drahtes 5a ist der Schlagrichtung des Drahtes 5b entgegengesetzt. An den Kreuzungspunkten 5c sind die Drähte 5a und 5b miteinander und mit der Kabelseele 1 mechanisch fest verbunden. Hierzu weist die Kabelseele 1 eine nicht dargestellte äußere metallische Lage auf.

Bei Inbetriebnahme des Supraleiterkabels wird flüssiger Stickstoff in den Innenraum des Metallrohres 2 eingeleitet. Die Kabelseele kühlt sich dabei ab und kontrahiert. Dabei wird die Wellenform nahezu aufgehoben. Die Erstreckung der Kabelseele 1 in Längsrichtung des Supraleiterkabels entspricht sowohl bei Raumtemperatur (300 K) als auch bei Betriebstemperatur (77K) des Kabels der Länge des Kryostaten.

## Patentansprüche

1. Supraleiterkabel mit einer supraleitfähigen flexiblen Kabelseele (1), welche in einem Kryostaten (2,3,4) verlegt ist, **dadurch gekennzeichnet,**
- **daß** die Kabelseele (1) bei Raumtemperatur in Form einer Welle oder Wendel in dem Kryostaten (2,3,4) verläuft und
- **daß** an der Kabelseele (1) ein kreuzartiges Netzwerk (5a,5b) an bestimmten Punkten (5c) in längsaxialen Abständen befestigt ist, wobei das Netzwerk (5a,5b) aus einem Material mit einem niedrigen thermischen Ausdehnungskoeffizienten besteht.

2. Supraleiterkabel nach Anspruch 2, **dadurch gekennzeichnet, daß** das Netzwerk (5a,5b) aus Invarstahl besteht.

3. Supraleiterkabel nach Anspruch 1 oder 2, **dadurch gekennzeichnet, daß** das Netzwerk (5a,5b) aus zumindest zwei die Kabelseele (1) in Form einer Schraubenlinie mit gegenläufiger Schlagrichtung umlaufenden Drähten oder Bändern (5a,5b) besteht, welche an ihren Kreuzungspunkten (5c) miteinander und mit der Kabelseele mechanisch fest verbunden sind.

4. Supraleiterkabel nach einem der Ansprüche 2 oder 3, **dadurch gekennzeichnet, daß** das Netzwerk bzw. die Drähte oder Bänder (5a,5b) des Netzwerkes an die äußere metallische Abschirmung der Kabelseele (1) punktuell angeschweißt oder angelötet sind.

## Claims

1. Superconductor cable having a superconductive flexible cable core (1), which is laid in a cryostat (2, 3, 4), **characterized in that** at room temperature the cable core (1) runs in the cryostat (2, 3, 4) in the form of a wave or helix, and **in that** a cross-like network (5a, 5b) is fastened on the cable core (1) at specific points (5c) at longitudinally axial intervals, the network (5a, 5b) consisting of a material with a low coefficient of thermal expansion.

2. Superconductor cable according to Claim 1, **characterized in that** the network (5a, 5b) consists of invar steel.

3. Superconductor cable according to Claim 1 or 2, **characterized in that** the network (5a, 5b) comprises at least two wires or strips (5a, 5b) running around the cable core (1) in the form of a helical line with opposed direction of lay, which are mechanically firmly connected to each other and to the cable core at their crossing points (5c).

4. Superconductor cable according to one of Claims 2 or 3, **characterized in that** the network or the wires or strips (5a, 5b) of the network are spot-welded or spot-soldered to the outer metallic shielding of the cable core (1).

## Revendications

1. Câble supraconducteur doté d'une âme (1) de câble flexible et supraconductrice placée dans un cryostat (2, 3, 4), **caractérisé en ce que**
l'âme (1) du câble présente à température ambiante la forme d'une ondulation ou d'une spirale dans le cryostat (2, 3, 4) et
**en ce que** sur l'âme (1) du câble, on fixe un réseau croisé (5a, 5b) en des emplacements définis (5c) à distance axiale dans le sens de la longueur, le réseau (5a, 5b) étant constitué d'un matériau à bas coefficient de dilatation thermique.

2. Câble supraconducteur selon la revendication 2, **caractérisé en ce que** le réseau (5a, 5b) est constitué d'acier invar.

3. Câble supraconducteur selon les revendications 1 ou 2, **caractérisé en ce que** le réseau (5a, 5b) est constitué d'au moins deux fils ou rubans (5a, 5b) qui entourent l'âme (1) du câble sous la forme d'une ligne en spirale dont les sens d'enroulement sont opposés, et qui sont solidarisés mécaniquement les uns aux autres et avec l'âme du câble en leurs points de croisement (5c).

4. Câble supraconducteur selon l'une des revendications 2 ou 3, **caractérisé en ce que** le réseau ou les fils ou rubans (5a, 5b) du réseau sont soudés ou fixés par soudage tendre par points sur le blindage métallique extérieur de l'âme (1) du câble.
